# EUROPEAN PATENT SPECIFICATION

(11) **EP 1 126 732 B1**
(45) Date of publication and mention of the grant of the patent: **27.02.2008**
(21) Application number: 01300010.4
(22) Date of filing: 03.01.2001
(51) Int. Cl.: H04Q 7/22, H04M 3/42

(54) **Location dependent service providing method and system**
Positionsabhängiges Dienstleistungsverfahren und System
Procédé et système pour fournir des services dépendants de la position

(30) Priority: 14.02.2000 JP 2000035705
(43) Date of publication of application: 22.08.2001
(73) Proprietor: KABUSHIKI KAISHA TOSHIBA, Kawasaki-shi, Kanagawa-ken 210-8572 (JP)
(72) Inventor: Doi, Miwako, Intellectual Property Division, Tokyo (JP); Sugiyama, Hiroshi, Intellectual Property Division, Tokyo (JP)
(74) Representative: Midgley, Jonathan Lee

(56) References cited:
- EP-A- 0 985 906
- WO-A-00/04730
- WO-A-00/44184
- WO-A-01/28273
- WO-A-01/60083
- WO-A-99/11078
- WO-A-99/26180
- WO-A-99/41927
- WO-A-99/55067
- WO-A-99/56144
- DE-A- 19 638 072
- US-A- 5 561 704
- US-A- 5 717 392
- US-A- 5 790 665
- US-A- 5 899 983
- ELEFTHERIADIS G P ET AL: "USER PROFILE IDENTIFICATION IN FUTURE MOBILE TELECOMMUNICATIONS SYSTEMS" IEEE NETWORK, IEEE INC. NEW YORK, US, vol. 8, no. 5, 1 September 1994 (1994-09-01), pages 33-39, XP000606584 ISSN: 0890-8044

## Description

### FIELD OF THE INVENTION

The present invention relates to a service providing system for providing various services to a mobile terminal such as a cellular-phone or a portable handy-phone.

### BACKGROUND OF THE INVENTION

In an advertisement displayed on an Internet homepage, i.e., banner advertisement, geographical boundaries do not exist because of the reach of the world wide Web. Accordingly, in order to advertise toward the world without the local limit, banner advertisement is a useful system. However, from a position of a user, even if the user finds an interesting advertisement and if the user can not actually utilize the service propagated by the advertisement, for example, if a store which sells a commodity propagated by the advertisement is located at remote place where the user can not easily go, this advertisement is not useful for the user.

On the other hand, in a TV broadcast or a radio broadcast, program contents are common for each area in the same country. However, the commercial content (CM) is different for each area and presents useful information for the audiences.

TV and radio audiences enjoy the common TV/radio program contents and the local commercial contents. They can purchase commodities based on the local advertisement information they obtain from the TV/radio broadcast. The contents via the mobile terminal are the same and independent on the mobile terminal location. It is not useful for the mobile terminal users to obtain the same advertisement nevertheless where they are. If the mobile terminal users obtain the location dependent advertisement information, they can immediately go the store or restaurant informed, and enjoy shopping or foods.

Furthermore, in Internet access by some cellular-phone terminal, i.e., i-mode, at the time of dialing to connect the terminal to the Internet, the telephone numbers provides a particular user ID of the cellular-phone. By EC (electronic commerce) technique attracting attention recently, if a commodity is purchased using the Internet, personal information such as a credit card number in addition to the user ID is transmitted. In case that the advertisement service is executed for the cellular-phone terminal through the Internet, it is necessary for the service provider side to strictly identify the user who requests the advertisement service. The necessity that the provider must identify the user occurs if the user actually executes the commodity purchase activity by watching the advertisement. However, a wireless access by present cellular-phone is realized on the assumption that information to identify the user of the terminal, i.e., the user ID, is transmitted. Therefore, even if the user simply watches the advertisement, anonymity is not guaranteed. If anonymity is not guaranteed, the user does not wish to watch the advertisement undecided for the user to utilize. As a result, the advertisement service itself using such a cellular-phone becomes meaningless or valueless.

As mentioned-above, in the prior art, as for the mobile terminal such as the cellular-phone, the service suitable for the portability of the mobile terminal is not presented.

Furthermore, in a service access to the Internet by the cellular-phone, if the provided service is an advertisement, the information to identify the user such as the user ID is disclosed notwithstanding that the provider need not originally identify the user. Accordingly, the user's anonymity is not maintained.

US 5,790,665 describes an information retrieval system in which data is retrieved anonymously by a user with the assistance of one or more trusted agents. The requesting user sends a message identifying the item requested to a database along with the user's address and an ordinary key. The message is encrypted with an encryption key of the database and the user's address is encrypted with an encryption key of the trusted entity. The database decrypts the message and retrieves the item requested. The database then encrypts the return message with the ordinary key and sends the encrypted item to the trusted entity along with the encrypted requesting user's address. The trusted entity decrypts the message including the requesting user's address and sends the item requested to the requesting user's address.

WO 01/60083 (prior art within the terms of Art. 54(3) EPC) describes a system for the passive location positioning of wireless handsets for the purpose of delivering a targeted data to users in a wireless communication network while protecting the privacy of the users by separating data collection and the message transmission functions from profiling and targeting functions. The network comprises a mediation server which receives for all location positioning data from the wireless communication network and sends standardized location positioning data to a second node, the profiling server. The profiling server tracks and profiles current and historical location positioning data, compiling databases of anonymous user profiles to permit targeting a personalised and relevant data. The profiling server matches target data to profiles and forwards the messages to the mediation server for onward transmission to users.

WO 01/28273 (also prior art within the terms of Art.54(3) EPC) describes a method and system for protecting a user identifier of a service user from the service provider in a mobile communications network utilizing the geographical information of the service user. The system comprises an encrypting device for generating service request specific anonymous identifier corresponding to the user identifier, an identification database for storing the user identifier and corresponding anonymous identifier, a service gateway for retrieving the user identifier and the anonymous identifier corresponding to one another and for substituting the identifiers in question with one another in the service requests and service responses and a location register for retrieving the user identifier corresponding to the anonymous identifier and for retrieving the geographical information of the service user based on the user identifier in question.

DE 19638072 describes a telecommunication network system which includes a control device located between the network and a service centre. The control device is arranged to replace a user identifier identifying an end subscriber with a temporary identifier so as to enable anonymous communication with a service provider.

### SUMMARY OF THE INVENTION

It is another object of the present invention to provide a service providing system for anonymously presenting a user of the mobile terminal to a service.

According to the invention there is provided a service providing system in a wireless network with a mobile terminal accessing the Internet, the system comprising: a service provider configured to provide a service to the mobile terminal in response to a first service request information sent by the mobile terminal; and a communication control unit configured to control communication between the mobile terminal and said service provider, said communication control unit including: means for converting a user identifier of the mobile terminal in the first service request information to a temporary identifier in response to the first service request information sent by the mobile terminal; the service providing system being characterised in that said service provider is configured to provide said requested service to the mobile terminal dependent on a location information of the mobile terminal, and in that said communication control unit further includes:- means for storing a communication control information including a service request identifier, a service provider name, the location information, the temporary identifier and a parameter necessary for location dependent service; means for creating a second service request information by excluding the temporary identifier from the communication control information; and means for sending the second service request information to said service provider.

### BRIEF DESCRIPTION OF THE DRAWINGS

Fig. 1 is a block diagram of a mobile terminal and a service providing system according to a first embodiment of the present invention.
Fig. 2 is an example of a dynamic user profile according to the first embodiment of the present invention.
Fig. 3 is a schematic diagram of processing flow of providing a location dependent service according to the first embodiment of the present invention.
Figs. 4A and 4B are examples of a service request information table and service request information in a wireless gateway according to the first embodiment of the present invention.
Figs. 5A and 5B are examples of a service request information table and service response information in a location dependent service providing server according to the first embodiment of the present invention.
Fig. 6 is a schematic diagram of an example use image of the mobile terminal.
Fig. 7 is a block diagram of the mobile terminal and the service providing system according to a second embodiment of the present invention.
Figs. 8A and 8B are examples of a dynamic user profile and a static user profile according to the second embodiment of the present invention.
Figs. 9A and 9B are examples of information stored in a dynamic user profile memory and a static user profile memory according to the second embodiment of the present invention.
Figs. 10A and 10B are examples of communication control information tables based on the dynamic user profile and the static user profile according to the second embodiment of the present invention.
Fig. 11 is a block diagram of the mobile terminal and the service providing system according to a third embodiment of the present invention.
Fig. 12 is a schematic diagram of processing flow of providing a service according to the third embodiment of the present invention.
Fig. 13 is a schematic diagram of application service according to the third embodiment of the present invention.
Fig. 14 is a schematic diagram illustrating a related mode of operation, which is not an embodiment of the invention, but an example useful for understanding the invention.

### DETAILED DESCRIPTION OF THE PREFERRED EMBODIMENTS

Hereinafter, embodiments of the present invention are explained below with reference to the drawings.

### (The first embodiment)

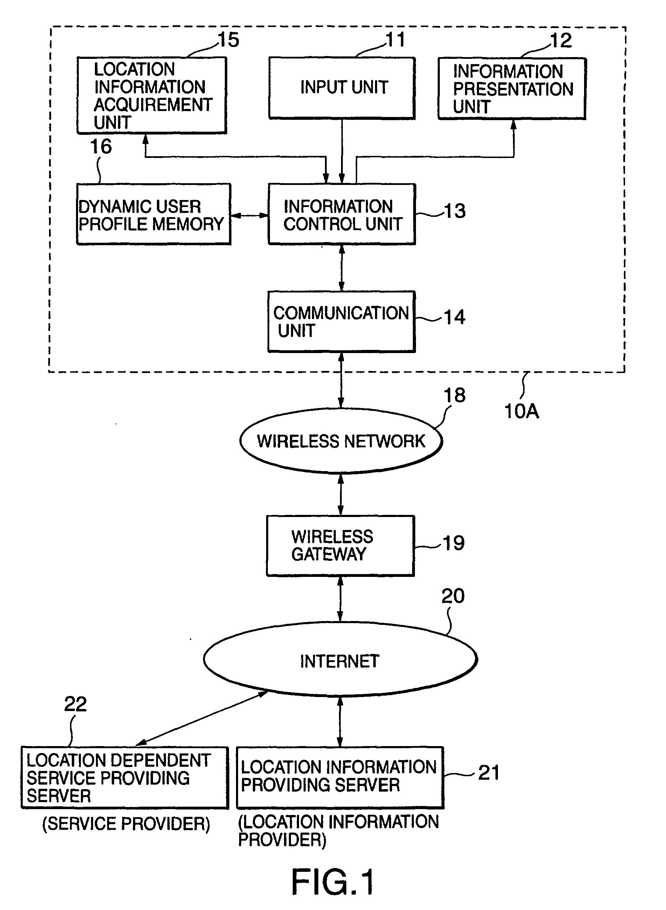

Fig. 1 is a block diagram of the mobile terminal and the service providing system according to the first embodiment of the present invention. This system consists of the mobile terminal 10A, a wireless gateway 19 mutually connecting a wireless network 18 and an Internet 20, a location information providing server 21 and a location dependent service providing server 22 connected to the Internet 20. The mobile terminal 10A is, for example, the cellular-phone or a portable information terminal. The mobile terminal 10A includes an input unit 11 such as various kinds of keys commonly found on a cellular-phone, an information presentation unit 12 such as a display or a speaker, an information control unit 13 including a CPU, a communication unit 14 including an antenna to transmit to and receive from the external world by wireless, a location information acquirement unit 15, and a dynamic user profile memory 16. Hereinafter, an internal component of the mobile terminal 10A is explained in detail.

The input unit 11 executes various kinds of operations including an input operation to select a service to be provided for the mobile terminal 10A as the operation related to the present invention.

The information presentation unit 12 presents location information acquired by the location information acquirement unit 15, or location information sent by the location information providing server 21, and service information provided by the location dependent service providing server 22 to the user.

The location information acquirement unit 15 acquires present location information of the mobile terminal 10A from discrimination information of a building located near or neighboring to the mobile terminal using a communication method such as "Bluetooth", "IrDA", or a wireless tag, and provides the location information to the information control unit 13.

The location information acquirement unit 15 may be omitted if location information having the accuracy necessary to decide the present location of the mobile terminal 10A is always provided by the location information providing server 21. Conversely, if the present location information of the mobile terminal 10A is always acquired by the location information acquirement unit 15, the location information providing server 21 may be omitted. Of course, the location information acquired by both the location information acquirement unit 15 and the location information providing server 21 may be used.

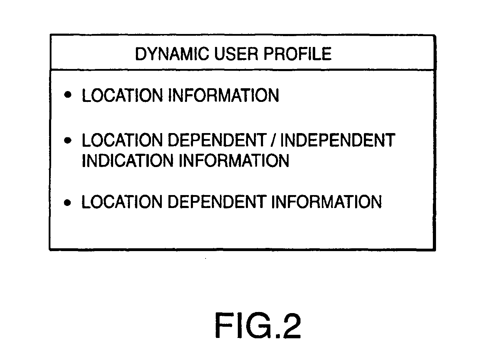

The dynamic user profile memory 16 stores information dynamically changed by a location change or a time passage of the mobile terminal 10A, in a user profile as the information related to the user of the mobile terminal 10A. Concretely, as shown in Fig. 2, (1) the location information of the mobile terminal 10A, (2) a location dependent/independent indication information representing a distinction whether the user receives the location dependent service or the location independent service, and (3) other location dependent information, are stored as the dynamic user profile. In this case, as the location information of the mobile terminal 10A in the dynamic user profile, the location information acquired by the location information acquirement unit 15 or the location information provision server 21 is used. Furthermore, in the dynamic user profile, user ID information related to the user's privacy is not included.

The communication unit 14 transmits/receives normal communication information of the mobile terminal 10A, and transmits a service request and the dynamic user profile stored in the dynamic user profile memory 16. Furthermore, the communication unit 14 transmits the location information acquired by the location information acquirement unit 15 and a location information request for provision of the location information to the location information providing server 21. Furthermore, the communication unit 14 receives the location information provided by the location information providing server 21 and the service information provided by the location dependent service providing server 22.

The information control unit 13 executes various kinds of information control such as a receipt of input from the input unit 11, a presentation control for the information presentation unit 12, a control of the location information acquirement unit 15, and a taking of acquired location information, control of read/write of the dynamic user profile memory 16, a providing of sending data to the communication unit 14 and a taking of receiving data from the communication unit 14.

Next, the wireless gateway 19, the location information providing server 21, and the location dependent service providing server 22 are explained. The communication unit 14 of the mobile terminal 10A is connected to the wireless gateway 19 through the wireless network 18. The wireless network 18 includes a base station communicating with the mobile terminal 10A and a mobile exchange connected to the base station, and it is connected to the wireless gateway 19. The wireless gateway 19 mutually connects the wireless network 18 and the Internet 20 as a communication network connected by the location information providing server 21 and the location dependent service providing server 22, and executes a protocol conversion. Furthermore, as a control related to the present invention, the wireless gateway 19 controls communication among the mobile terminal 10A, the location information providing server 21, and the location dependent service providing server 22 through the wireless network 18 and the Internet 20.

The location information providing server 21 remotely acquires a present location of the mobile terminal 10A independent of the location information acquirement unit 15, and provides location information such as the latitude and the longitude to the mobile terminal 10A. For example, the location of the mobile terminal 10A is acquired by GPS. Furthermore, in case that the wireless network 18 is a PHS type network, the communicatable zone is narrow in comparison with normal cellular-phone network. Therefore, the location of the mobile terminal 10A is comparatively acquired as high accuracy by detecting the zone in which the mobile terminal 10A operates. In case that the wireless network 18 is the cellular-phone network of a CDMA system, the communicatable zone is large in comparison with the PHS type network. However, two or three base stations always catch the mobile terminal 10A. Therefore, the location of the mobile terminal 10A is also comparatively acquired with a high accuracy.

The location dependent service providing server 22 receives the dynamic user profile transmitted by the mobile terminal 10A, and provides a service dependent on the location of the mobile terminal 10A to the mobile terminal 10A according to the location information in the dynamic user profile. This location information is acquired by the location information acquirement unit 15 or provided from the location information providing server 21 to the mobile terminal 10A. In this case, the service dependent on the location of the mobile terminal 10A includes, for example, various kinds of advertisements directed to the area where the mobile terminal 10A is located, for example, an advertisement of a store such as a restaurant and gift shop, coupon information, an advertisement such as a tourist resort, a theme park, a lodging institute, a cinema theater, an introduction of a special product, a guidance of public institute, a weather forecast, traffic guidance, and guidance to various events. Furthermore, in the first embodiment, the location information providing server 21 and the location dependent service providing server 22 are respectively retained and controlled by a location information provider and a service provider. However, both servers 21 and 22 may be retained and controlled by the same provider.

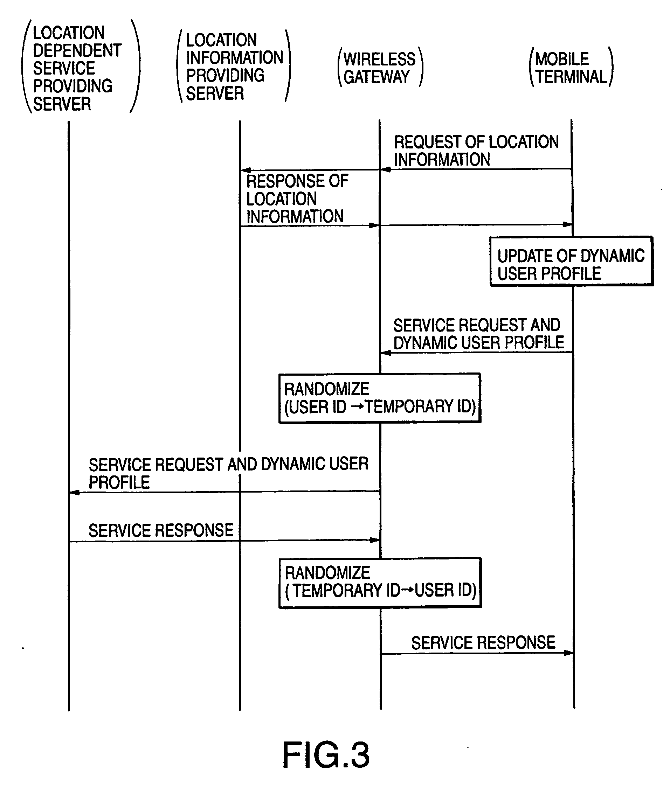

Next, a flow of provision processing of the location dependent service according to the first embodiment is explained by referring to Fig. 3. Fig. 3 shows an information exchange among the mobile terminal 10A, the wireless gateway 19, the location information providing server 21, and the location dependent service providing server 22 in case of providing the location dependent service. Assume that a user carrying the mobile terminal 10A desires to receive traffic guidance to reach a destination. In this case, the mobile terminal 10A accesses a service provider of the traffic guidance including the location dependent service providing server 22. A location of the user's present place is informed to the location dependent service providing server 22. Hereinafter, a case that this location information is provided from the location information providing server 21 to the mobile terminal 10A and supplied to the location dependent service providing server 22 is explained.

When the user operates a service request to receive a location dependent service such as traffic guidance through the input unit 11 of the mobile terminal 10A, a request for location information is transmitted from the mobile terminal 10A before the service request is transmitted. For example, the request for location information includes a user ID. The user ID is not necessary to be an absolute ID. It may be an ID assigned from several IDs prepared by the wireless gateway 19 in order to temporarily discriminate from other user IDs. The request for location information transmitted by the mobile terminal 10A is sent to the location information providing server 21 through the wireless network 18, the wireless gateway 19 and the Internet 20.

In response to this request for location information, the location information providing server 21 acquires, for example, location information (x, y) consisting of the latitude and the longitude measured by GPS, and sends the location information to the mobile terminal 10A. In the mobile terminal 10A receiving the location information from the location information providing server 21 through the Internet 20, the wireless gateway 19, and the wireless network 18, a location information as one part of the dynamic user profile stored in the dynamic user profile memory 16 is updated.

The mobile terminal 10A transmits the updated dynamic user profile with the service request information. The information of service request and the updated dynamic user profile sent from the mobile terminal 10A are received by the wireless gateway 19 through the wireless network 18.

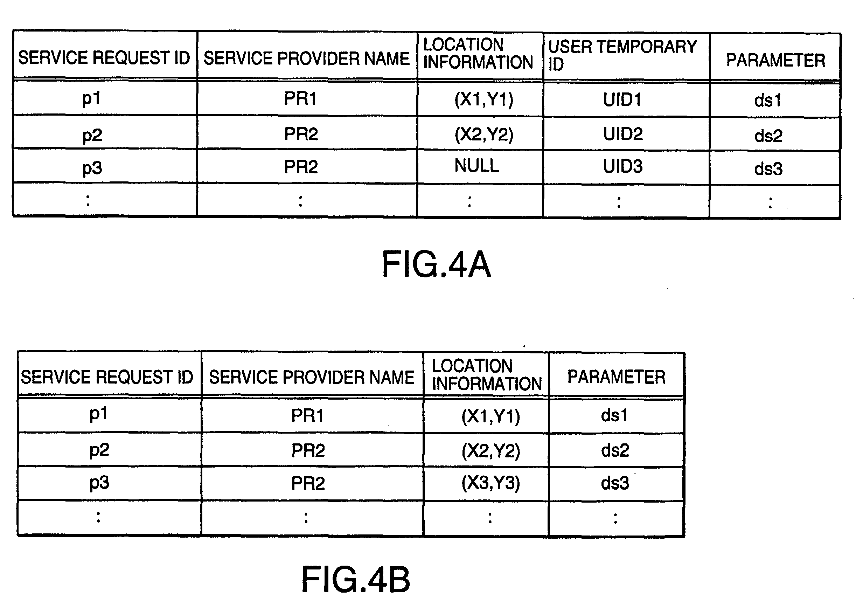

The wireless gateway 19 stores a table of communication control information as shown in Fig. 4A. In this table, a service request ID (p1, p2, ...) representing a packet ID of the service request sent from the mobile terminal, a service provider name (PR1, PR2, ...) controlling the location information providing server 22 as the destination of a service request packet, a location information ((X1, Y1), (X2, Y2), ...) of the mobile terminal, a user temporary ID (UID1, UID2, ...), a parameter (ds1, ds2, ...) necessary to actually provide the service are correspondingly stored.

In this case, the user temporary ID (UID1, UID2, ...) is a temporarily assigned ID to specify the mobile terminal as a providing destination of the service sent from the location dependent service providing server 22. The user temporary ID corresponds to the user ID as the user's actual ID of the mobile terminal by a user ID correspondence table (not shown) of the wireless gateway 19. In short, in the wireless gateway 19, the user ID of the mobile terminal is replaced by the user temporary ID (Randomize (user ID → temporary ID) in Fig. 3) in order to conceal the user ID from the outside.

The parameter (ds1, ds2, ...) is, for example, the latitude and the longitude representing the destination, or the address information if, for example, the location dependent service is traffic guidance. The parameter may be a time list in case of non-arriving at the destination.

In Fig. 4A, the service request packet of the service request ID "P3" does not include location information, and a column of the location information is "NULL". In this case, the wireless gateway 19 decides that the service request packet of the service request ID "P3" is not transmitted to the location dependent service providing server 22. Accordingly, the wireless gateway 19 transmits the service request pocket to the location information providing server 21 and obtains the location information. In this way, after all contents of the packet are prepared, the service request packet is transmitted to the location dependent service providing server 22. The wireless gateway 19 sends the service request and the dynamic user profile to the location dependent service providing server 22 according to the table of communication control information shown in Fig. 4A.

In this case, in the service request packet, the user temporary ID is excluded as shown in Fig. 4B. The service request packet without a user temporary ID is transmitted. Accordingly, for example, it is prevented that a service provider having the location dependent service providing server 22 knows the user ID from the user temporary ID and it is effective to keep the privacy secret. Furthermore, when the wireless gateway 19 transmits the service request and the dynamic user profile to the location dependent service providing server 22, ID of the wireless gateway 19 is also transmitted (not shown in Fig. 4B). In this way, after the wireless gateway 19 transmits the service request and the dynamic user profile to the location dependent service providing server 22, the location dependent service providing server 22 creates service information such as traffic guidance as the location dependent service information according to the location information and the parameter included in the dynamic user profile, and transmits it as service response information to the wireless gateway 19.

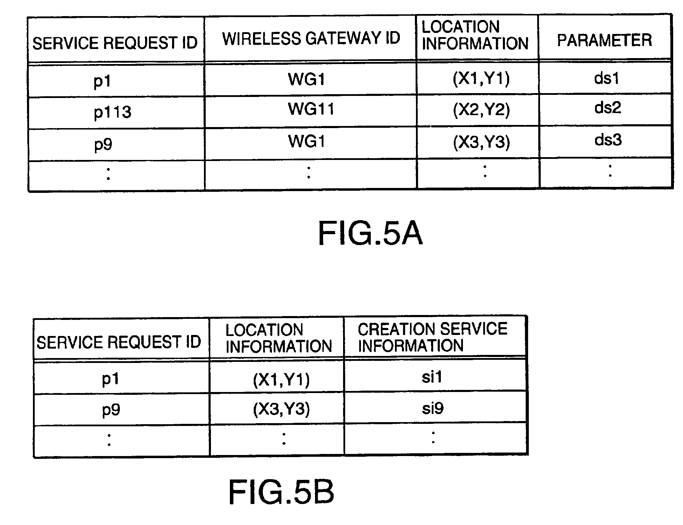

The location dependent service providing server 22 receives a plurality of service requests from the wireless gateway 19 in each place. The location dependent service providing server 22 stores the received service request in a service request information table. As shown in Fig. 5A, in the service request information table, a service request ID (p1, p113, ...), a wireless gateway ID (WG1, WG11, ...) of the wireless gateway 19 as the destination, location information ((X1, Y1), (X2, Y2), ...) of the mobile terminal 10A, and the parameter (ds1, ds2, ...) are correspondingly stored. The location dependent service providing server 22 creates service information for the service request by referring to this table and sends a service response.

For example, as shown in Fig. 5B, if the service information sil for the service request of the service request ID "p1" is created, the location dependent service providing server 22 finds the wireless gateway ID as the destination of the service information sil by referring to the service request information table shown in Fig. 5A. In this case, the wireless gateway ID is "WG1". Therefore, as for the wireless gateway 19 whose ID is "WG1", the service information sil with the service request ID and the location information of the mobile terminal 10A are transmitted as service response information as shown in Fig. 5B. In this case, as for the service request received by the same wireless gateway 19, for example, as shown in Fig. 5B, as for the service request of the service request ID "P1, P9" received by the wireless gateway 19 of ID "WG1" in the table of Fig. 5A, created service information "si1, si9" with the service request ID and the location information of the mobile terminal 10A may be sent to the wireless gateway 19 together.

The wireless gateway 19 compares the service response information sent in the format shown in Fig. 5B with the communication control information table shown in Fig. 4a, and specifies the mobile terminal to receive the service response information. For example, it is checked whether the service request ID "p1" in Fig. 5B is included in the communication control information table in Fig. 4A. If the service request ID "P1" is not included, a corresponding mobile terminal does not exist. Therefore, the wireless gateway 19 sends back the service response information to the location dependent service providing server 22. If the service request ID "p1" is included in the communication control information table shown in Fig. 4A, it is checked whether the location information corresponding to the service request ID "p1" in Fig. 5B is the same as the location information corresponding to "p1" in Fig. 4A. If this location information is the same, the user temporary ID corresponding to the service request ID "p1" is extracted from the communication control information table in Fig. 4A, the user ID corresponding to the user temporary ID is recognized by referring to the above-mentioned user ID corresponding table (Randomize (temporary user ID → user ID) in Fig. 3), and the service response information is sent to the mobile terminal 10A of the user ID.

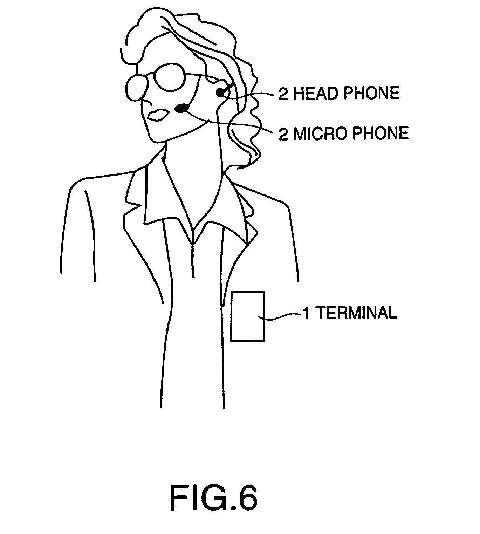

Fig. 6 shows one example of a mobile terminal for traffic guidance service according to the first embodiment. For example, the user inserts the terminal 1 into a pocket and goes to the destination while the user hears the service information of route guidance through a headphone 2. Furthermore, the user speaks a service request through a microphone 3.

In this way, in the first embodiment, by using the location information provided by the location information provision server 21 or acquired by the location information acquirement unit 15 of the mobile terminal 10A, the location information service providing server 22 provides the service of local advertisement or guidance dependent on the location of the mobile terminal 10A to the mobile terminal 10A. Furthermore, in the first embodiment, from the user side carrying the mobile terminal 10A, the user ID is managed as the user temporary ID by the wireless gateway 19, and both the user ID and the user temporary ID are not sent to the server 22 in order to keep them secret. Therefore, the user ID and the user's personal privacy are not disclosed to the service provider, and the user can safely receive the service dependent on the location.

### (The second embodiment)

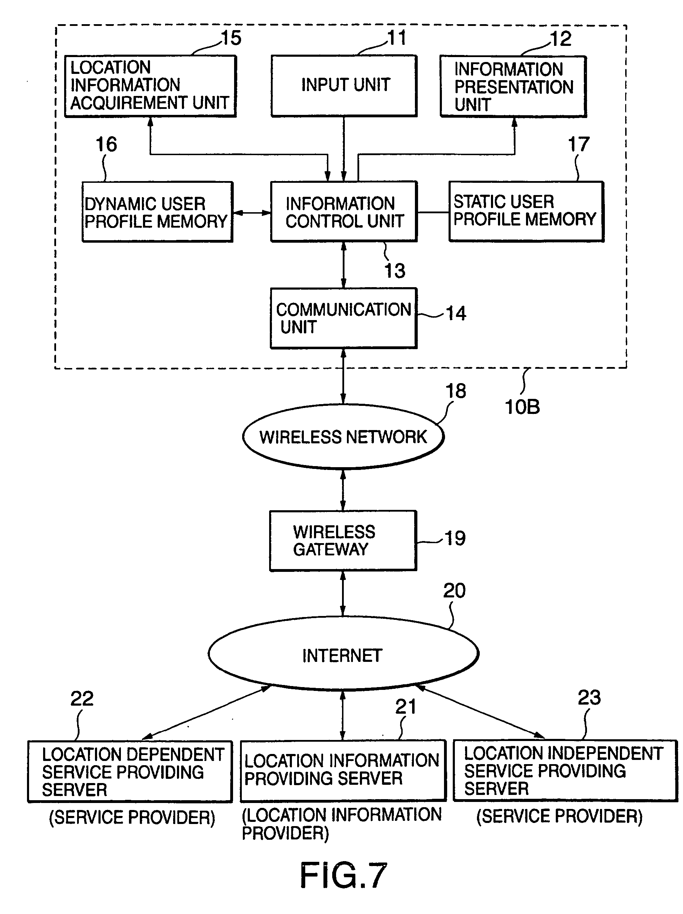

Fig. 7 is a block diagram of the mobile terminal and the service providing system according to the second embodiment of the present invention. In the second embodiment, in addition to the dynamic user profile memory 16, the mobile terminal 10B includes a static user profile memory 17 for storing a static user profile not changed by the location change and the time passage.

A location independent service providing server 23 receives the static user profile transmitted from the mobile terminal 10B, and provides a service independent on a location of the mobile terminal 10B to the mobile terminal 10B. It is retained and managed by a service provider. The service provider for managing the location independent service providing server 23 may be the same as a provider for managing the location dependent service providing server 22 or the location information providing server 21.

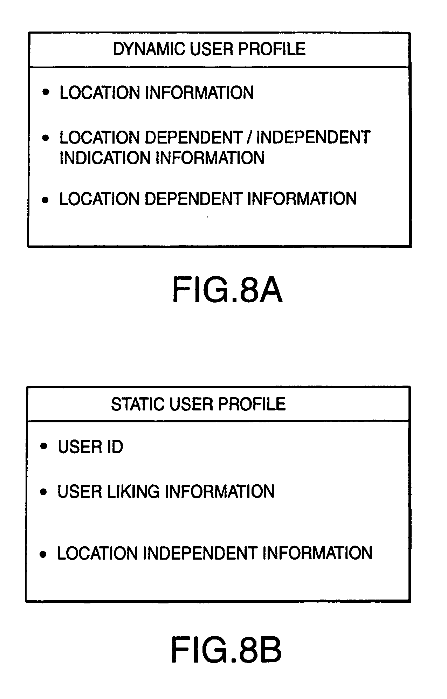

In the same way as in first embodiment, the dynamic user profile memory 16 stores information dynamically changed according to a location change and a time passage of the mobile terminal 10B, in a user profile as the information related to the user of the mobile terminal 10B. As shown in Fig. 8A, (1) the location information of the mobile terminal 10B, (2) a location dependent/independent indication information representing a distinction whether the user receives the location dependent service or the location independent service, and (3) other location dependent information are stored as the dynamic user profile.

In the dynamic user profile, user ID information related to the privacy of the user of the mobile terminal 10B is not included.

On the other hand, the static user profile memory 17 stores static information not changed by a location change and a time passage of the mobile terminal 10B in a user profile as the information related to the user of the mobile terminal 10B. As shown in Fig. 8B, (1) the user ID of the mobile terminal 10B, (2) a user liking information representing the user's taste (For example, the user likes French food, the user's hobby is cinema appreciation, and the user likes a tourist resort.), and (3) a location independent information are stored. When the user outputs the service request from the mobile terminal 10B, a distinction whether the user requests the location dependent service from the location dependent service providing server 22 or the location independent service from the location independent service providing server 23 is determined by the location dependent/independent indication information registered in the dynamic user profile memory 16.

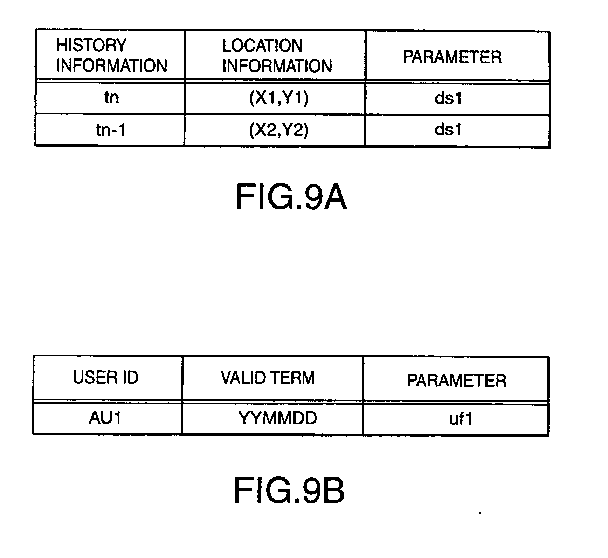

Figs. 9A and 9B show examples of memory contents of the dynamic user profile memory 16 and the static user profile memory 17 in the second embodiment. As shown in Fig. 9A, the dynamic user profile consists of history information (For example, date (tn, tn-1, ...) when the location information is acquired), the acquired location information ((X1, Y1), (X2, Y2), ...), and a parameter (ds1, ds2, ...). In case of traffic guidance as the location dependent service, the parameter (ds1, ds2, ...) consists of the latitude and the longitude of the destination, or a list of address information. In this way, the dynamic user profile changes over time as, for example, the location of the mobile terminal 10B or the service request in the user profile changes. In short, the information does not infringe the user's privacy. The service request is transmitted and the provided service is received without identifying the user.

On the other hand, the static user profile is information not changed over short period of time in the user profile, and it consists of a user ID (AUI), a valid term (YYMMDD), and a parameter (uf1) as shown in Fig. 9B.

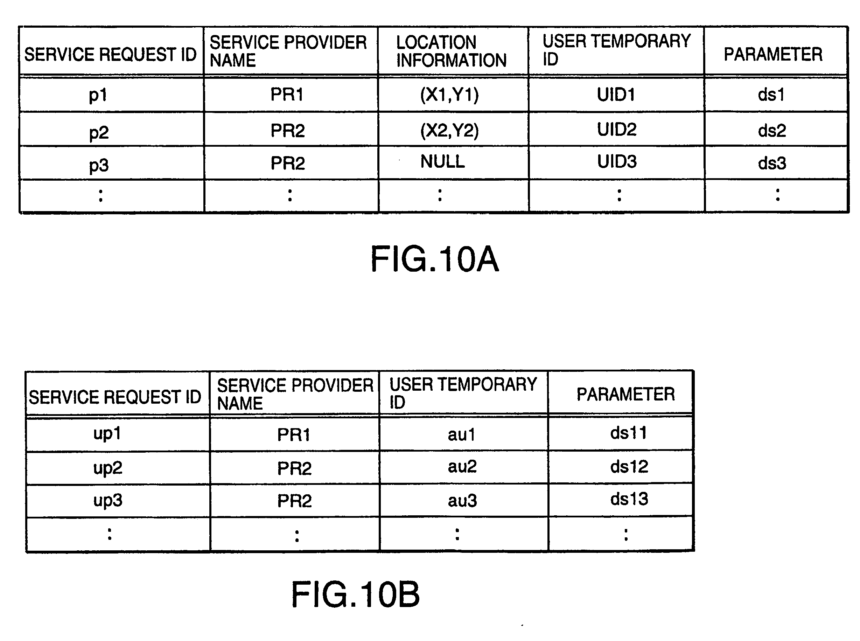

The wireless gateway 19 distinctly treats the dynamic user profile and the static user profile from the mobile terminal 10B as follows. Figs. 10A and 10B respectively show a communication control information table based on the dynamic user profile and the static user profile stored in the wireless gateway 19. As for a control based on the dynamic user profile, in the same way as the first embodiment, the wireless gateway 19 issues a user temporary ID to identify the user, and stores the communication control information table as shown in Fig. 10A. Then, based on the communication control information table, the wireless gateway 19 excludes the user temporary ID from the service request and the dynamic user profile, and sends the service request and the dynamic user profile to the location dependent service providing server 22 in a format including an ID of the wireless gateway 19.

On the other hand, the static user profile including information related to the user's privacy maintains a high secrecy level. Therefore, as shown in Fig. 10B, the wireless gateway 19 stores the communication control information table. This table consists of a service request ID (up1, up2, ...) to discriminate the service content, a service provider name (PR1, PR2, ...), a user temporary ID (au1, au2, ...), and a parameter (ds11, ds12, ...) necessary for the service. Then, based on the communication control information table, the wireless gateway 19 sends the service request and the static user profile to the location independent service providing server 23 by a format including ID of the wireless gateway 19.

In this case, as for the user temporary ID in Fig. 10A and the user temporary ID in Fig. 10B, a different ID is assigned to the same user of the mobile terminal 10B. The user temporary ID (UID1, UID2, ...) generated from the dynamic user profile is generated whenever the user requests a service, and a fixed user temporary ID is not assigned to the same user. Therefore, if a hacker breaks into the wireless gateway 19, and even if the hacker finds a place of the user unspecified at that time, the hacker cannot identify each user. In the same way, the user temporary ID (au1, au2) generated from the static user profile is not linked to the location information of the user. Therefore, even if the user informs a credit number for charge payment, and if the user does not permit, the hacker cannot know where the user is located and what the user did.

In this way, in the second embodiment, the user obtains the location information of the mobile terminal 10B without identification of the user, and separately receives the location dependent service from the location dependent service providing server 22 and the location independent service such as payment necessary to identify from the location independent service providing server 23.

### (The third embodiment)

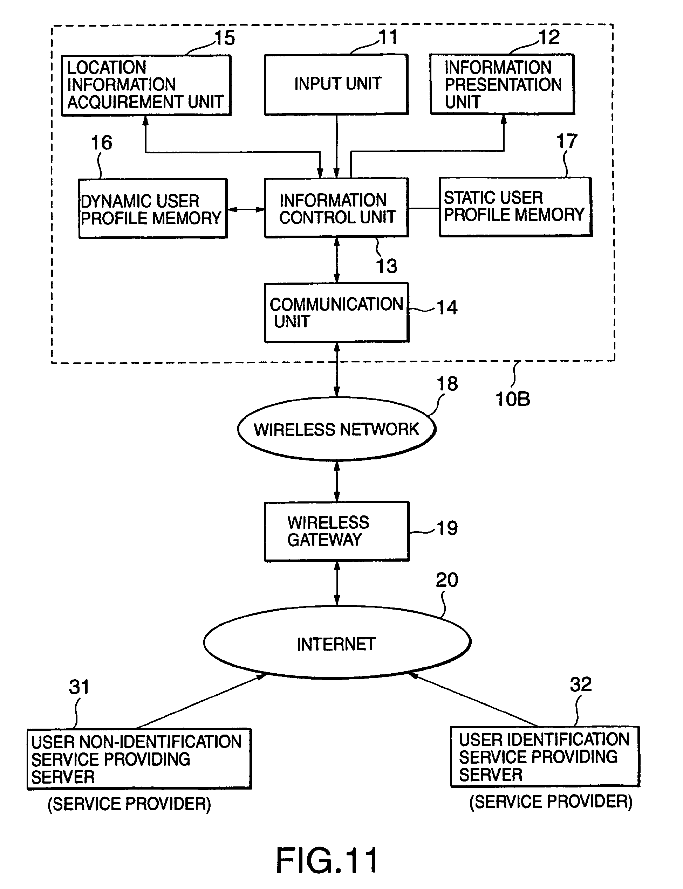

Fig. 11 is a block diagram of the mobile terminal and the service providing system according to a third embodiment of the present invention. In the third embodiment, instead of the location information providing server 21, a user non-identification service providing server 31 for providing a service not requiring a user identification such as the location information to the mobile terminal 10B is set, and a user identification service providing server 32 for providing a service requiring a user identification such as the purchase of a ticket or commodity to the mobile terminal 10B is set, which are different from the second embodiment. The user non-identification service providing server 31 may be the same as the location information providing server 21, or may include a function of the location information providing server 21. In the same way, the user identification service providing server 32 may be the same as the location dependent information providing server 22, or may include a function of the location dependent service providing server 22.

In the second embodiment, the wireless gateway 19 does not especially discriminate the service provider (server) to send the dynamic user profile and the static user profile respectively stored as a format of the communication control information table shown in Figs. 10A and 10B. However, in the third embodiment, the dynamic user profile is sent to the user non-identification service providing server 31 and the static user profile is sent to the user identification service providing server 32. In this way, the user profile is sent with distinction of the destination server. Furthermore, when the dynamic user profile stored as the format of the communication control information table shown in Fig. 10A is sent to the user non-identification service providing server 31, the user temporary ID is excluded, and it is sent as a format including ID of the wireless gateway 19 in the same way as in the second embodiment. When the static user profile shown in Fig. 10B is sent to the user identification service providing server 32, the user temporary ID is not excluded and it is sent in a format including the ID of the wireless gateway 19.

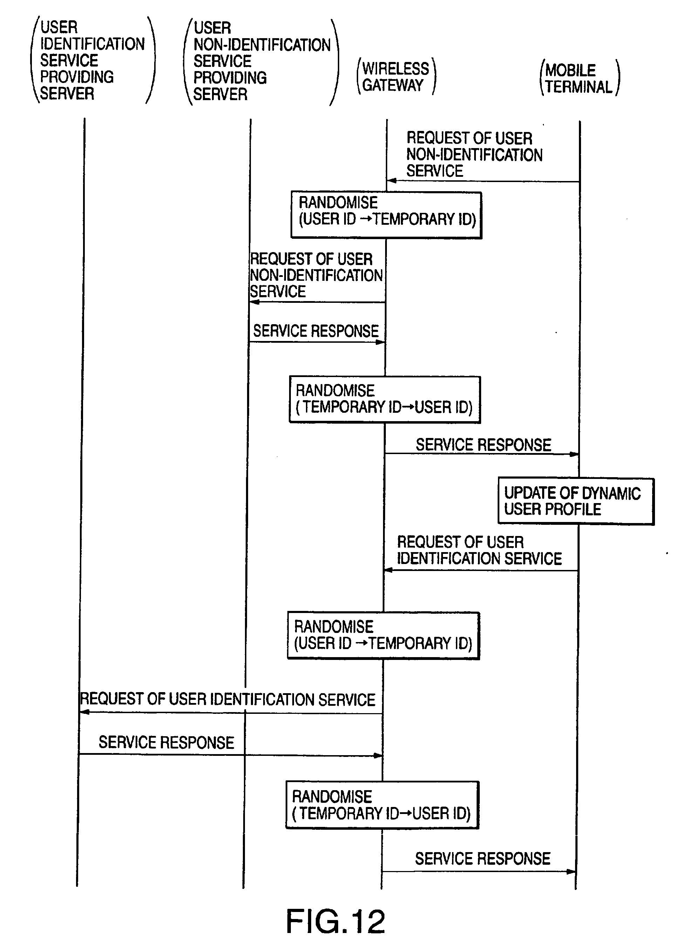

Next, a processing flow of the service request and the service providing according to the third embodiment is explained by referring to Fig. 12. In short, when the mobile terminal 10B transmits a request for user non-identification service, the wireless gateway 19 executes a randomizing operation (user ID → user temporary ID), and stores the communication control information table shown in Fig. 10A. Then, the user temporary ID is excluded from this table in Fig. 10A, and the request for user non-identification service as the format including ID of the wireless gateway 19 is sent to the user non-identification service providing server 31. After the user non-identification service providing server 31 sends the service response information in response to the request, the wireless gateway 19 executes a randomizing operation (user temporary ID → user ID), and transfers the service response information to the mobile terminal 10B which sent the request for user non-identification service. In this case, in the mobile terminal 10B, the dynamic user profile stored in the dynamic user profile memory 16 is updated.

On the other hand, when the mobile terminal 10B sends a request for a user identification service, the wireless gateway 19 executes a randomizing operation (user ID → user temporary ID), and stores the communication control information table shown in Fig. 10B. In this case, the user temporary ID is not excluded as shown in Fig. 10B. Then, a request for user identification service in a format including an ID of the wireless gateway 19 is sent to the user identification service providing server 32. When the user identification service providing server 32 sends a service response information in response to the request, the wireless gateway 19 executes a randomizing operation (user temporary ID -> user ID) and transfers the service response information to the mobile terminal 10B that sent the request for user identification service.

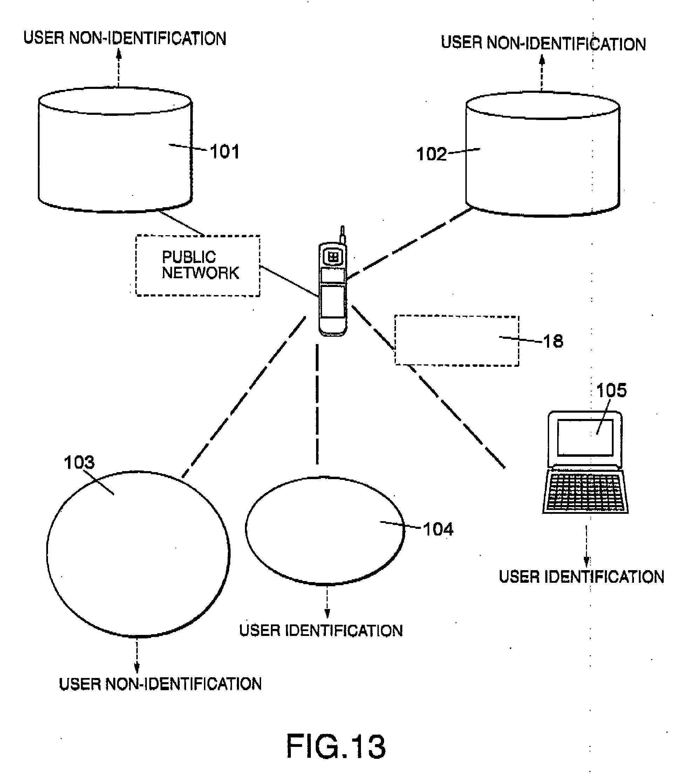

Fig. 13 is a schematic diagram of an outline of an application service of the third embodiment. As shown in Fig. 13, an advertisement server 101, a local EC server 102, a super market register, a convenience store, and a theme park 103 belong to the user non-identification service. An entrance of the super market, the convenience store 104, and a notebook PC 105, belong to the user identification service.

In this way, in the third embodiment, the user non-identification service not requiring a user identification and the user identification service requiring a user identification are distinctly controlled. Therefore, in case of receiving the user non-identification service, the user can safely receive the service without infringement of the user's privacy.

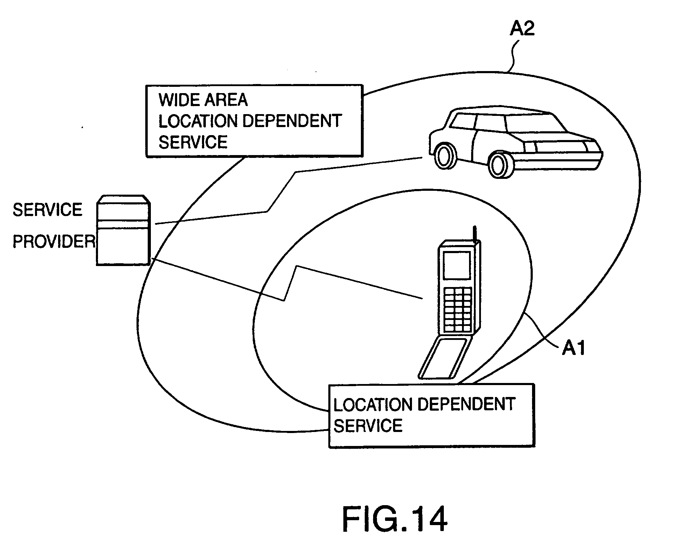

Fig. 14 is a schematic diagram of a related mode of operation which is not an embodiment of the present invention, but an example useful for understanding the invention. As shown in Fig. 14, in case that the user of the mobile terminal is a pedestrian and in case that the user rides in a high speed mobile object such as an automobile, an electric car, a bus, or a motorcycle, a movement area of the former per unit of time is A1, a movement area of the latter per unit of time is A2, and these movement areas are different (A1 A2). Accordingly, when the user receives the location dependent service, object areas necessary for the service information of both cases are naturally different.

When the location dependent service providing server 22 provides the location dependent service in response to the service request from the mobile terminal, it is desired that the service for a narrow area is provided if the user of the mobile terminal is a pedestrian, and the service for a wide area is provided if the user rides in a high speed mobile object. In short, in proportion to action area (movement area of the mobile terminal) of the user of the mobile terminal, a search area of service information to be provided as the location dependent service, i.e., a location dependent area (an area to obtain the service information in case that the location of the mobile terminal is regarded as a center position of the area), is adaptively changed.

In order to concretely realize a providing of adaptive location dependent service according to such user's action area (movement area of the mobile terminal), for example, information related to the speed of the mobile terminal, which represents whether the user is a pedestrian or rides in a high speed mobile object, is acquired and newly added to the static user profile. The information of the moving speed with the service request is sent to the location dependent service providing server 22. In the location dependent service providing server 22, the search area (location dependent area) of service information provided as the location dependent service changes by the information of the moving speed.

In this way, the search area of service information provided as the location dependent service is adaptively changed by the information of moving speed of the mobile terminal. Accordingly, a more useful location dependent service is provided for the user carrying the mobile terminal.

As mentioned-above, in the present invention, the service suitable for movement of the mobile terminal, i.e., the service dependent on the location of the mobile terminal, is provided for the mobile terminal. Furthermore, the service is provided for the user of the mobile terminal while the user's anonymity is maintained. In short, the service is provided while the anonymity is maintained by type of the service or the user is identified.

A memory device, including a CD-ROM, floppy disk, hard disk magnetic tape, or semiconductor memory can be used to store instructions for causing a processor or computer to perform the process described above.

Other embodiments of the invention will be apparent to those skilled in the art from consideration of the specification and practice of the invention disclosed herein. It is intended that the specification and examples be considered as exemplary only, with the scope of the invention being defined by the following claims.

## Claims

1. A service providing system in a wireless network (18) with a mobile terminal (10) accessing the Internet (20), the system comprising:
a service provider (22) configured to provide a service to the mobile terminal (10) in response to a first service request information sent by the mobile terminal (10) ; and
a communication control unit (19) configured to control communication between the mobile terminal (10) and said service provider (22),
said communication control unit (19) including:
means for converting a user identifier of the mobile terminal (10) in the first service request information to a temporary identifier in response to the first service request information sent by the mobile terminal (10);
the service providing system being **characterised in that** said service provider (22) is configured to provide said requested service to the mobile terminal (10) dependent on a location information of the mobile terminal (10),
and **in that** said communication control unit (19) further includes:-
means for storing a communication control information including a service request identifier, a service provider name, the location information, the temporary identifier and a parameter necessary for location dependent service;
means for creating a second service request information by excluding the temporary identifier from the communication control information; and
means for sending the second service request information to said service provider (22).

2. The service providing system according to claim 1,
further comprising:
a location information provider (21) configured to provide the location information to the mobile terminal (10) in response to a location information request sent by the mobile terminal (10) through said communication control unit (19).

3. The service providing system according to claim 1,
wherein said communication control unit (19) includes means for storing a correspondence table between the user identifier and the temporary identifier.

4. The service providing system according to claim 3,
wherein said communication control unit (19) includes
means for converting the user identifier in another service request to a different temporary identifier in response to the other service request sent by the mobile terminal (10).

5. The service providing system according to claim 4,
wherein said service provider (22) includes
means for storing a request information including the service request identifier, a wireless gateway identifier of said communication control unit (19), the location information and the parameter in response to the second service request information sent by said communication control unit (19).

6. The service providing system according to claim 5,
wherein said service provider (22) includes
means for creating a service information by referring to the parameter, and
means for sending a service response information to said communication control unit (19), the service response information including the service request identifier, the location information and the service information.

7. The service providing system according to claim 6,
wherein said communication control unit (19) includes
means for reconverting the temporary identifier corresponding to the service request identifier in the service response information to the user identifier in response to the service response information sent by said service provider (22), and
means for sending the service information to the mobile terminal (10) of the user identifier.

8. The service providing system according to any one of claims 1-7,
further comprising:
a location independent service provider (23) configured to provide a service independent of the location of the mobile terminal (10) in response to a service request sent by the mobile terminal (10) through said communication control unit (19).

9. The service providing system according to claim 8,
wherein said communication control unit (19) includes:
means for storing a communication control information including the service request identifier, the service provider name, the temporary identifier, and the parameter in response to the service request irrespective of the location sent by the mobile terminal (10), and
means for sending a service request information which is the same as the communication control information to said location independent service provider (23) .

10. A service providing system according to claim 1,
further comprising:
a user identification service provider (32) configured to provide a service requiring a user identification; and
a user non-identification service provider (31) configured to provide a service not requiring a user identification

11. The service providing system according to claim 10,
wherein said communication control unit (19) includes
means for spending a user identification service request which is the same as the communication control information to said user identification service provider (32) if the service request is a user identification service request.

12. The service providing system according to claim 11,
wherein said communication control unit(19) includes
means for sending a user non-identification service request which is the communication control information excluding the temporary identifier to said user non-identification service provider (31) if the service request is a user non-identification service request.

## Patentansprüche

1. Dienstbereitstellungssystem in einem drahtlosen Netz (18) mit einem mobilen Endgerät (10), das auf das Internet (20) zugreift, das System umfassend:
einen Dienstbereitsteller (22), der konfiguriert ist, um einen Dienst für das mobile Endgerät (10) als Reaktion auf eine erste Dienstanforderungsinformation, die von dem mobilen Endgerät (10) gesandt wurde, bereitzustellen; und
eine Kommunikationssteuereinheit (19), die konfiguriert ist, um Kommunikation zwischen dem mobilen Endgerät (10) und dem Dienstbereitsteller (22) zu steuern,
die Kommunikationssteuereinheit (19) enthaltend:
Mittel zum Umwandeln einer Teilnehmerkennung des mobilen Endgeräts (10) in der ersten Dienstanforderungsinformation in eine temporäre Kennung als Reaktion auf die erste Dienstanforderungsinformation, die von dem mobilen Endgerät (10) gesandt wurde;
das Dienstbereitstellungssystem **dadurch gekennzeichnet, dass** der Dienstbereitsteller (22) konfiguriert ist, um den angeforderten Dienst abhängig von einer Positionsinformation des mobilen Endgeräts (10) für das mobile Endgerät (10) bereitzustellen,
und dadurch, dass die Kommunikationssteuereinheit (19) weiter enthält:
Mittel zum Speichern einer Kommunikationsteuerungsinformation, die eine Dienstanforderungskennung, einen Dienstbereitstellernamen, die Positionsinformation, die temporäre Kennung und einen Parameter, der für positionsabhängigen Dienst erforderlich ist, enthält;
Mittel zum Erzeugen einer zweiten Dienstanforderungsinformation durch Ausschließen der temporären Kennung aus der Kommunikationsteuerungsinformation; und
Mittel zum Senden der zweiten Dienstanforderungsinformation an den Dienstbereitsteller (22).

2. Dienstbereitstellungssystem nach Anspruch 1,
weiter umfassend:
einen Positionsinformationsbereitsteller (21), der konfiguriert ist, um die Positionsinformation für das mobile Endgerät (10) als Reaktion auf eine Positionsinformationsanforderung, die von dem mobilen Endgerät (10) durch die Kommunikationssteuereinheit (19) gesandt wurde, bereitzustellen.

3. Dienstbereitstellungssystem nach Anspruch 1,
wobei die Kommunikationssteuereinheit (19) Mittel zum Speichern einer Entsprechungstabelle zwischen der Teilnehmerkennung und der temporären Kennung enthält.

4. Dienstbereitstellungssystem nach Anspruch 3,
wobei die Kommunikationssteuereinheit (19) enthält:
Mittel zum Umwandeln der Teilnehmerkennung in einer anderen Dienstanforderung in eine verschiedene temporäre Kennung als Reaktion auf die andere Dienstanforderung, die von dem mobilen Endgerät (10) gesandt wurde.

5. Dienstbereitstellungssystem nach Anspruch 4,
wobei der Dienstbereitsteller (22) enthält:
Mittel zum Speichern einer Anforderungsinformation, die die Dienstanforderungskennung, eine Kennung eines drahtlosen Gateways der Kommunikationssteuereinheit (19), die Positionsinformation und den Parameter als Reaktion auf die zweite Dienstanforderungsinformation, die von der Kommunikationssteuereinheit (19) gesandt wurde, enthält.

6. Dienstbereitstellungssystem nach Anspruch 5,
wobei der Dienstbereitsteller (22) enthält:
Mittel zum Erzeugen einer Dienstinformation durch Bezugnahme auf den Parameter, und
Mittel zum Senden einer Dienstantwortinformation an die Kommunikationssteuereinheit (19), wobei die Dienstantwortinformation die Dienstanforderungskennung, die Positionsinformation und die Dienstinformation enthält.

7. Dienstbereitstellungssystem nach Anspruch 6,
wobei die Kommunikationssteuereinheit (19) enthält:
Mittel zum Zurückwandeln der temporären Kennung, die mit der Dienstanforderungskennung in der Dienstantwortinformation korrespondiert, in die Teilnehmerkennung als Reaktion auf die Dienstantwortinformation, die von dem Dienstbereitsteller (22) gesandt wurde, und
Mittel zum Senden der Dienstinformation an das mobile Endgerät (10) der Teilnehmerkennung.

8. Dienstbereitstellungssystem nach einem der Ansprüche 1-7,
weiter umfassend:
einen positionsunabhängigen Dienstbereitsteller (23), der konfiguriert ist, um einen Dienst unabhängig von der Position des mobilen Endgeräts (10) als Reaktion auf eine Dienstanforderung, die von dem mobilen Endgerät (10) durch die Kommunikationssteuereinheit (19) gesandt wurde, bereitzustellen.

9. Dienstbereitstellungssystem nach Anspruch 8,
wobei die Kommunikationssteuereinheit (19) enthält:
Mittel zum Speichern einer Kommunikationsteuerungsinformation, die die Dienstanforderungskennung, den Dienstbereitstellernamen, die temporäre Kennung und den Parameter enthält, als Reaktion auf die Dienstanforderung unabhängig von der Position, die von dem mobilen Endgerät (10) gesandt wurde, und
Mittel zum Senden einer Dienstanforderungsinformation, die die gleiche wie die Kommunikationsteuerungsinformation ist, an den positionsunabhängigen Dienstbereitsteller (23).

10. Dienstbereitstellungssystem nach Anspruch 1,
weiter umfassend:
einen Teilnehmerkennungs-Dienstbereitsteller (32), der konfiguriert ist, um einen Dienst bereitzustellen, der eine Teilnehmerkennung erfordert; und
einen teilnehmerkennungsfreien Dienstbereitsteller (31), der konfiguriert ist, um einen Dienst bereitzustellen, der keine Teilnehmerkennung erfordert.

11. Dienstbereitstellungssystem nach Anspruch 10,
wobei die Kommunikationssteuereinheit (19) enthält:
Mittel zum Senden einer Teilnehmerkennungs-Dienstanforderung, die die gleiche wie die Kommunikationsteuerungsinformation ist, an den Teilnehmerkennungs-Dienstbereitsteller (32), wenn die Dienstanforderung eine Teilnehmerkennungs-Dienstanforderung ist.

12. Dienstbereitstellungssystem nach Anspruch 11,
wobei die Kommunikationssteuereinheit (19) enthält:
Mittel zum Senden einer teilnehmerkennungsfreien Dienstanforderung, die die Kommunikationsteuerungsinformation ohne die temporäre Kennung ist, an den teilnehmerkennungsfreien Dienstbereitsteller (31), wenn die Dienstanforderung eine teilnehmerkennungsfreie Dienstanforderung ist.

## Revendications

1. Système pour fournir des services dans un réseau sans fil (18) avec un terminal mobile (10) accédant à Internet (20), le système comprenant :
un fournisseur de services (22) configuré pour fournir un service au terminal mobile (10) en réponse à des premières informations de demande de service envoyées par le terminal mobile (10) ; et
une unité de contrôle de communication (19) configurée pour contrôler la communication entre le terminal mobile (10) et ledit fournisseur de services (22),
ladite unité de contrôle de communication (19) comprenant :
un moyen pour convertir un identificateur d'utilisateur du terminal mobile (10) dans les premières informations de demande de service en un identificateur temporaire en réponse aux premières informations de demande de service envoyées par le terminal mobile (10);
le système pour fournir des services étant **caractérisé en ce que** ledit fournisseur de services (22) est configuré pour délivrer ledit service demandé au terminal mobile (10) en fonction d'informations de position du terminal mobile (10),
et **en ce que** ladite unité de contrôle de communication (19) comprend en outre :
un moyen pour stocker des informations de contrôle de communication comprenant un identificateur de demande de service, un nom de fournisseur de services, les informations de position, l'identificateur temporaire et un paramètre nécessaire pour des services dépendants de la position;
un moyen pour créer des secondes informations de demande de service en excluant l'identificateur temporaire des informations de contrôle de communication ; et
un moyen pour envoyer les secondes informations de demande de service audit fournisseur de services (22).

2. Système pour fournir des services selon la revendication 1,
comprenant en outre :
un fournisseur d'informations de position (21) configuré pour fournir les informations de position au terminal mobile (10) en réponse à une demande d'informations de position envoyée par le terminal mobile (10) par l'intermédiaire de ladite unité de contrôle de communication (19).

3. Système pour fournir des services selon la revendication 1,
dans lequel ladite unité de contrôle de communication (19) comprend un moyen pour stocker une table de correspondance entre l'identificateur de l'utilisateur et l'identificateur temporaire.

4. Système pour fournir des services selon la revendication 3,
dans lequel ladite unité de contrôle de communication (19) comprend :
un moyen pour convertir l'identificateur de l'utilisateur dans une autre demande de service en un identificateur temporaire différent en réponse à l'autre demande de service envoyée par le terminal mobile (10).

5. Système pour fournir des services selon la revendication 4,
dans lequel ledit fournisseur de services (22) comprend :
un moyen pour stocker des informations de demande comprenant l'identificateur de demande de service, un identificateur de passerelle sans fil de ladite unité de contrôle de communication (19), les informations de position et le paramètre en réponse aux secondes informations de demande de service envoyées par ladite unité de contrôle de communication (19).

6. Système pour fournir des services selon la revendication 5,
dans lequel ledit fournisseur de services (22) comprend :
un moyen pour créer des informations de service en faisant référence au paramètre, et
un moyen pour envoyer des informations de réponse de service à ladite unité de contrôle de communication (19), les informations de réponse de service comprenant l'identificateur de demande de service, les informations de position et les informations de service.

7. Système pour fournir des services selon la revendication 6,
dans lequel ladite unité de contrôle de communication (19) comprend :
un moyen pour reconvertir l'identificateur temporaire correspondant à l'identificateur de demande de service dans les informations de réponse de service en l'identificateur de l'utilisateur en réponse aux informations de réponse de service envoyées par ledit fournisseur de services (22), et
un moyen pour envoyer les informations de service au terminal mobile (10) de l'identificateur de l'utilisateur.

8. Système pour fournir des services selon l'une quelconque des revendications 1 à 7,
comprenant en outre :
un fournisseur de services indépendant de la position (23) configuré pour délivrer des services indépendants de la position du terminal mobile (10) en réponse à une demande de service envoyée par le terminal mobile (10) par l'intermédiaire de ladite unité de contrôle de communication (19).

9. Système pour fournir des services selon la revendication 8,
dans lequel ladite unité de contrôle de communication (19) comprend :
un moyen pour stocker des informations de contrôle de communication comprenant l'identificateur de demande de service, le nom du fournisseur de services, l'identificateur temporaire et le paramètre en réponse à la demande de service indépendamment de la position envoyée par le terminal mobile (10) ; et
un moyen pour envoyer des informations de demande de service qui sont les mêmes que les informations de contrôle de communication audit fournisseur de services indépendant de la position (23).

10. Système pour fournir des services selon la revendication 1,
comprenant en outre:
un fournisseur de services à identification d'utilisateur (32) configuré pour délivrer des services nécessitant une identification de l'utilisateur ; et
un fournisseur de services sans identification d'utilisateur (31) configuré pour délivrer des services ne nécessitant pas une identification de l'utilisateur.

11. Système pour fournir des services selon la revendication 10,
dans lequel ladite unité de contrôle de communication (19) comprend :
un moyen pour envoyer une demande de service à identification d'utilisateur qui est la même que les informations de contrôle de communication audit fournisseur de services à identification d'utilisateur (32) si la demande de service est une demande de service à identification d'utilisateur.

12. Système pour fournir des services selon la revendication 11,
dans lequel ladite unité de contrôle de communication (19) comprend :
un moyen pour envoyer une demande de service sans identification d'utilisateur, qui consiste en les informations de contrôle de communication à l'exclusion de l'identificateur temporaire, audit fournisseur de services sans identification d'utilisateur (31) si la demande de service est une demande de service sans identification d'utilisateur.
